# EUROPEAN PATENT SPECIFICATION

(11) **EP 0 494 939 B1**
(45) Date of publication and mention of the grant of the patent: **11.01.1995**
(21) Application number: 90915213.4
(22) Date of filing: 04.10.1990
(51) Int. Cl.: B41J 2/415, B41J 2/005, G06K 15/14

(54) **METHOD TO IMPROVE PRINTING QUALITY OF GREY SCALES AND COLOUR FOR PRINTERS**
VERFAHREN ZUR QUALITÄTSVERBESSERUNG IN HALBTON- UND MEHRFARBDRUCK FÜR DRUCKER
PROCEDE APPORTANT DES AMELIORATIONS A LA QUALITE DES GRIS ET DES COULEURS DANS DES IMPRIMANTES

(30) Priority: 04.10.1989 SE 8903273
(43) Date of publication of application: 22.07.1992
(73) Proprietor: ARRAY PRINTERS AB, S-431 33 Mölndal (SE)
(72) Inventor: LARSON, Ove, S-421 74 Västra Frölunda (SE)
(74) Representative: Roth, Ernst Adolf Michael
(86) International application number: SE9000640
(87) International publication number: WO9104864

(56) References cited:
- EP-A- 0 292 292
- US-A- 4 092 650
- US-A- 4 498 090
- US-A- 4 672 432
- US-A- 4 736 254
- PATENT ABSTRACTS OF JAPAN, Vol 9, No 225, (E342); JP A 60 084071
- PATENT ABSTRACTS OF JAPAN, Vol 9, No 255, (E349); JP A 60 103871

## Description

The invention refers to a method to improve quality of printing, when producing halftone images on an information carrier using printer means, in which a number of cells (pixels) are used for creating images, each cell consisting of a number of dots, which are brought together in the cell, whereby number of the dots are variable.

### BACKGROUND OF THE INVENTION

Digital reproduction of grey scale or half-tone pictures demands that the grey-tones are converted to screen dots the size and division of which is proportional to the perceived blacking impression. That is, sparsely distributed small dots are perceived as a light shade while large dots lying closely together are interpreted by the eye as a dark shade. This technique is used today in all forms of reproduction of half-tone pictures where the printing method is not able to vary the color value in every single screen dot or other unit area of the printed picture.
However in certain printing methods the color value in the screen dots of the picture can be varied.
In most of the methods sued today for printing from computers there are no possibilities to change the size and or the color value of the dots of the printers, without simultaneously reducing the resolution of the print and thereby reduce the quality of the print.
The method which thereby is most common, consists of bringing together the increments of the printer, in the following called dots, into cells (or pixels)in which cells the number of written dots is directly related to the size of the cell. This technique is called dithering.

A grate deal of research has been devoted to quantify the perceived quality of grey scale pictures as a function of the resolution (cells/2.54 cm (=cells/inch)) of the printed picture and the number of grey tones. A rule of thumb in this case can be that the product of resolution and the number of grey-tones here called Q, should be some thousands, within certain limits for the cell resolution and the number of grey-tones contained.

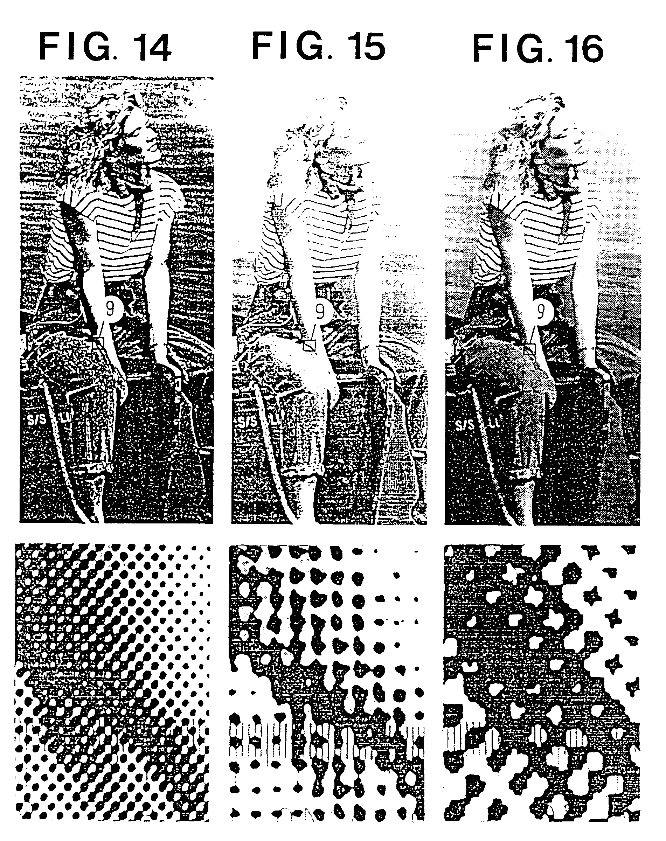

In Fig. 14 to 16 this dependence is illustrated, whereby Fig. 14 shows how conventional photographic technique is able to reproduce grey-tones. The resolution (cells/2.54 cm (=cells/inch)) in this picture is defined by the photographic contact screen that has been used. eg. 120 cells/2.54 cm (=cells/inch), (or 120 lines per inch as is recommended by the nomenclature in this connection). The number of grey-tones in fig. 14 can be regarded as large and only limited by the grain size in the photographic film. The rectangles 9 in fig. 14-16 are shown enlarged in fig. 14A, 15A and 16A. The conventional photographic technique gives a very high Q-value.

In fig. 15 is shown how the same picture has been reproduced by means of dithering technique in a laser printer with the resolution 300 dots/2.54 cm (=dots/inch) which technique cannot change he size of the dot or the dot color value. This picture is produced with a cell resolution of 75 cells/2.54 cm (=cells/inch), that is every cell contains 4x4 dots which in fig. 15 gives 16 grey-tones in addition to the purely white area in the grey-scale. Hereby the Q-value will be 17 x 75 = 1275, which should be regarded as optimal capability of a laser printer, what concerns reproduction of half-tone pictures.

In EP-B1-0 390 847 (= PCT-SE88-00653) is shown a method of developing pictures and text with pigment particles on an information carrier, directly from computer generated electrical signals, whiteout need for these signals to be intermediately stored at a temporary conversion to light energy, which is the case in photo conductive printers, eg. laser printers. This has been solved by bringing the information carrier into electrical cooperation with at least a screen or gate formed matrix, preferably an electrode matrix, which through control in accordance to desired configuration of the pattern, at least partly opens and closes passages through the matrix by galvanic connection of this to at least a voltage source and by thus opened passages an electrical field is set free for attraction of the pigment particles towards the information carrier. This method (henceforth called the EMS-concept), as it is described in the above patent, makes it possible to individually control the size and/or color value of the dots.
Another method which makes the control of the size and/or color value of the dots possible is contained in photoconductive printers the light source of which consists of an array of light emitting diodes, so called LED-printers, in which the emitted amount of light and/or light energy of the light emitting diodes is individually controllable.
Large efforts in research and development are made today on printer concepts which allow this type of dot-size or dot density control. Common to all these methods is that the printing speed is related to the number of sizes and/or densities. That is, if a picture with Q-value is to be printed, the printing speed of the printer has to be substantially reduced.
Another problem for this type of printing method constitutes in the repetition accuracy for the different dot sizes and dot densities respectively. A grey-scale picture should contain at least a number of ten grey-scales to be recognized as lifelike. In those cases where pigment particles are used to generate the color value the number of well limited and repeatable dot sizes and/or densities of the dots can be limited.

To sum up it can be mentioned that even if printing methods with control of the size of the dots and/or color value are developed in order to improve grey-scale reproduction this technique will not substantially influence the customers benefit since the printers will be slow and/or limited to a too small number of grey-tones.

The same technique which has been described here, can be applied to reproduction of colour scales, where the colours magenta, cyan and yellow together can be mixed by means of dots of different sizes to cells with new colours. Even here the customers benefit is limited by speed performance and the number of colours in accordance to the above.

Through Sakura et al (US 4 672 432), discloses a method for reproducing a halftone color image, by controlling each picture element comprising a plurality of cells and one dot for each cell. At least two colorant densities are used for at least some of the colors. When there is more than one colorant densities are used for at least some of the color.

Prior art uses a number of discrete areas to create a picture element of fixed size. Those discrete areas are then filled or not filled with colorant of fixed reflection density (color, color value or color value). The resultant picture element is then treated as fixed size with discrete steps of variable reflection density.
In US 4 672 432, the variable reflection density is also achieved by changing the number of fixed area, fixed refection density dots in a picture element. Greater range of reflection density is achieved by using two inks, one of low reflection density and one of high reflection density. This is still the same fundamental method of changing the number of the fixed area dots in a picture element. The use of two inks is equivalent to using larger number of dots without incurring the loss of resolution normally associated with more dots.

### THE OBJECT OF THE INVENTION AND MOST IMPORTANT FEATURES

The object of the invention is to create a method which improves the printing quality for grey-tones and color in printers which can control and change the size and/or the density of the dots of the printer. The object here is to make printing possible of a large number of grey tones or colours with good repetition accuracy and uniform quality. Moreover the invention implies that the printing speed of the printer has not to be reduced in corresponding degree as would be the case when using only control of the size of the dots and /or color value, for many types of print.

These problems have been solved by a number - minimum two - dots with variable color value and form, ie. size and/or shape, whereby each dot in the cell is individually controllable with respect to the color value and form of the dots, so that the dots form a preselected pattern in each cell, and wherein the pattern varies with respect to the number of dots, and the color value, and/or the dot size and/or the form of the dot.
By creating cells consisting of at least two individually controllable dots as for size and/or color value, the number of perceived grey- tones can be substantially increased in comparison to what can be reproduced each by dot control and dithering technique respectively. The need for a number of well limited and repeatable dot sizes and/or densities of the dots hereby can be made smaller, whereby the speed of the printer has not to be reduced as much.

This technique, in the following called DDC (Dot & dithering Control), gives EMS, LED and other printer concepts improved performance when printing grey-scales and at reproduction of colour. In fig. 16 the quality is exemplified of a grey scale picture with a Q-value over 3000, which can be achieved with a printer with the resolution 300 dots/2.54 cm (=dots/inch) and four dot sizes.

### DESCRIPTION OF THE DRAWINGS

The invention will be described below in greater detail with reference to accompanying drawings, which show some embodiments.

Fig. 1 shows four sections, eg. in the form of a mesh of an electrode matrix and diagrammatically the control of the dot size according to the EMS- concept.
Fig. 2 shows in a diagram how the potential of the electrodes in the Fig. 1 affects the dot size.
Fig. 3 shows four sections, eg. in the form of a mesh of an electrode matrix and diagrammatically the control of the dot density according to the EMS-concept.
Fig. 4 shows in a diagram how the potential of the electrodes in Fig. 3 influences the dot color value.
Fig. 5 shows four sections, eg. in the form of a mesh of an electrode matrix and diagrammatically the control of dot size and color value according to the EMS-concept.
Fig. 6 shows in a diagram how the potential of the electrodes in Fig. 5 influences the dot size and the color value.
Fig. 7 shows four dots of different sizes in addition to 0- level which represents the absence of a dot.
Fig. 8 shows diagrammatically how the dithering technique can be combined with control of the dot size at five levels. Fig. 9 shows four different densities of dots of equal size plus a 0-level which represents the absence of a dot.
Fig. 10 shows diagrammatically how the dithering technique can be combined with control of the density at five levels.
Fig. 11 shows four different densities of four dots of different size plus a o-level which represents the absence of a dot.
Fig. 12 shows diagrammatically how the dithering technique can be combined control of both the dot size and the dot color value at five levels.
Fig. 13A and 13B illustrates examples of picture qualities, which can be achieved with the DDC-technique in a 300 dots/2.54 cm (=dots/inch) printer.
Fig. 14-16 shows the difference between different reproduction methods.

By influencing geometries and other parameters in the EMS concept the dependence of the dots to the control voltage of the electrodes can be changed.
The dots illustrated in the figures shown represent a grey-scale but instead of grey-tones, the dots can have any tone of colour

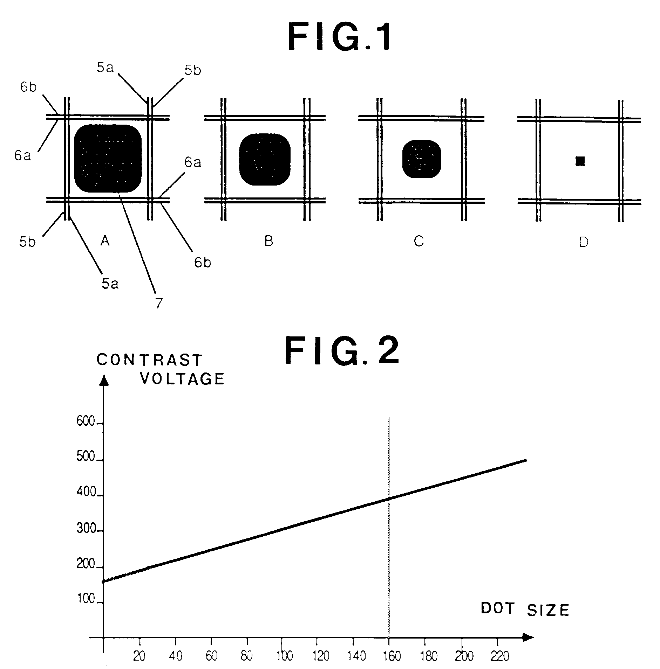

Fig. 1 and 2 diagrammatically in an enlargement show how the size of the dot 7 only can be changed by varying the contrast voltage of the electrodes 5a and 6a, which are included in an electrode matrix.
The values on the axes in the diagrams in fig. 2, 4 and 6 only constitute examples. The shaded line in the diagrams in fig. 2, 4 and 6 diagrammatically show how the parameter dependence is somewhat uncertain.

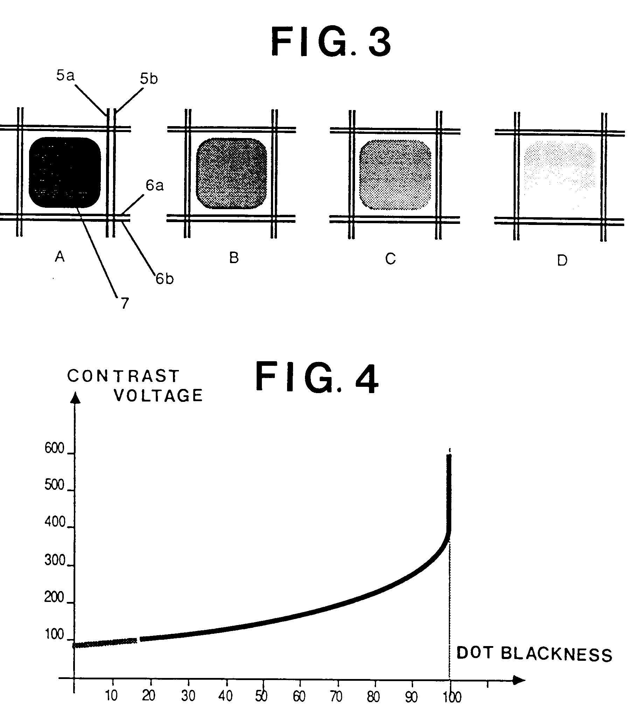

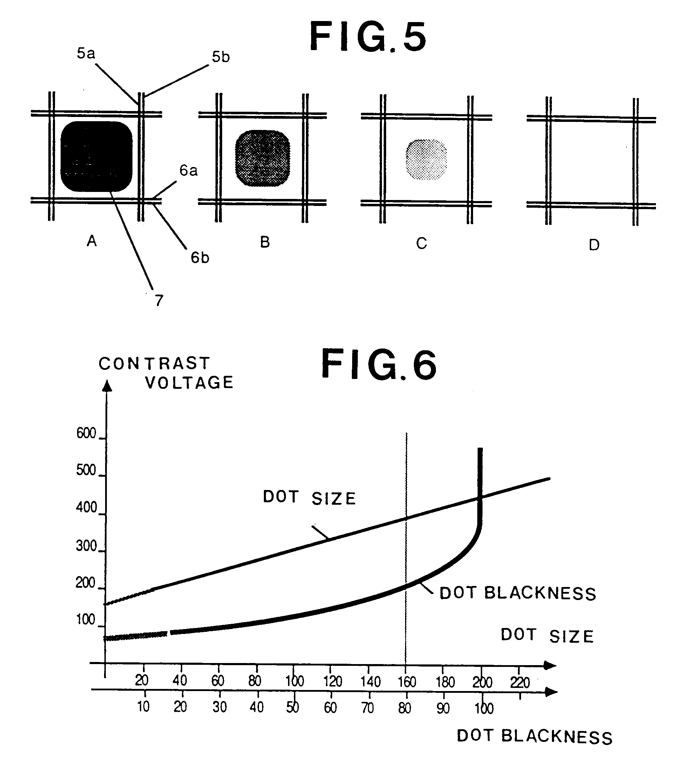

In fig. 3 and 6 is shown diagrammatically how only the density of dot 7 (in % ; of which 100% represents completely black and 0% represents completely white) is influenced by the potential at the electrodes 5a and 6a.
In fig. 5 and 6 is shown diagrammatically how both the size and the density of the dot 7 is influenced by the potential at the electrode 5a and 6a. By changing eg. the intensity of field between the information carrier and the developing roller (see EP-B1-0 390 847), the coupling between dot size and color value can be changed, whereby fig. 6 only constitutes an example of such a coupling.

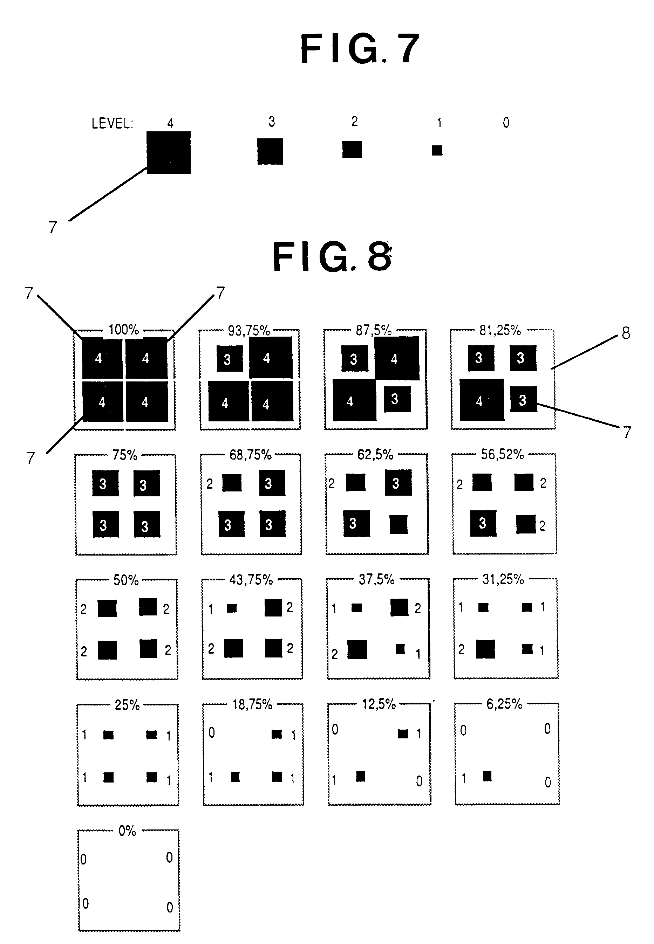

In fig. 8 is shown diagrammatically and enlarged an embodiment of the method according to the invention where four dots together form a cell 8. Each cell is on the top indicated by a percent number (eg. 62.5%) which aims at showing the perceived density for the whole cell 8 observed in natural size. Every dot can be printed in four different sizes 1,2,3 and 4, which is shown in fig. 7. The absence of a dot, the 0-level in fig.7 also represents a state, which with advantage can be used to increase the number of perceived grey-tones of the cell 8.

Conventional dithering technique in this example only should offer four grey-tone levels of the cell 8 (100,75,50 and 25%) in addition to the completely white state (0%). By combining the control of the size of the dots in five levels in the embodiment shown the number of grey-tones perceived from the cell 8 can be increased to 16 (100%,93.75%,87.5%,...,6.25%) plus the completely white state (0%). This is carried out by the first state 100% of the cell 8 contains of four dots 7 in size 4. The first grey-tone 93.75% after the completely black cell 100% is represented by one of the dots 7 being reduced in size at level 3. In the subsequently following grey-tone 87.5% a further dot 7 has been reduced to size 3. In this case it can be advantageous to choose the diagonally placed dot 7, which is shown in fig. 8, since the eye by this finds it more difficult to dissolve the internal structure of the cell. The pattern according to which the dots are changed in the cell 8 is however according to the invention not fixed to the pattern shown, but can be carried out according to quite different sequences. For pedagogic reasons it has been chosen to present one and the same sequence in the drawings. In the cell 8 which is represented by the grey-tone 81.25% three of the dots 7 of the cell 8 have been reduced to size 3 whereby only one dot 7 has maintained its original size 4.

In the subsequently following grey-scale 75% all dots 7 in the cell 8 have been reduced to size 3. The principle for changing the grey-scale for the whole cell 8 then follows the same description as the one given above. The absence of a dot "level 0" in fig. 7 is used as a structure element in the lightest grey-tones 18.75, 12.5, 6.25 and 0%.

For pedagogic reasons it has been chosen here to show the dimensional relation of the dots as linear. The perception of the eye of the density is however not linear either to the size of the cell or to the size of the dots contained in the cell 8.

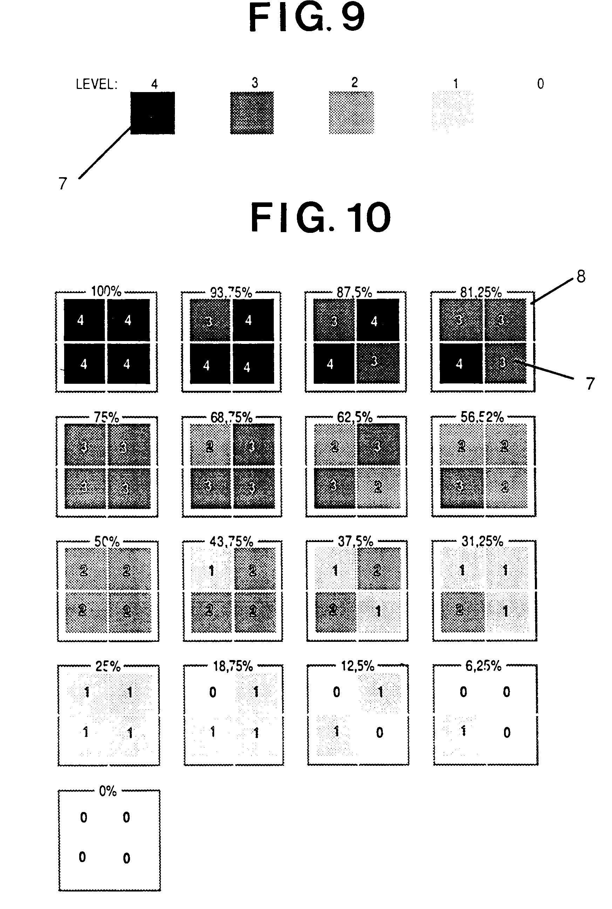

In fig. 9 and 10 is shown how the invention can be applied on a printer the controllability of which on the dots 7 follows the one shown in fig. 3 and 4, that is, only the density of the dot can be controlled. The description of this embodiment follows the one given for fig. 7 and 8 above. Even here the density of the dot 7 has to be adapted to the total perception of the grey-tone of the cell 8, so that the different grey-tones of the print distribute evenly over the scale from 100% to 0%.

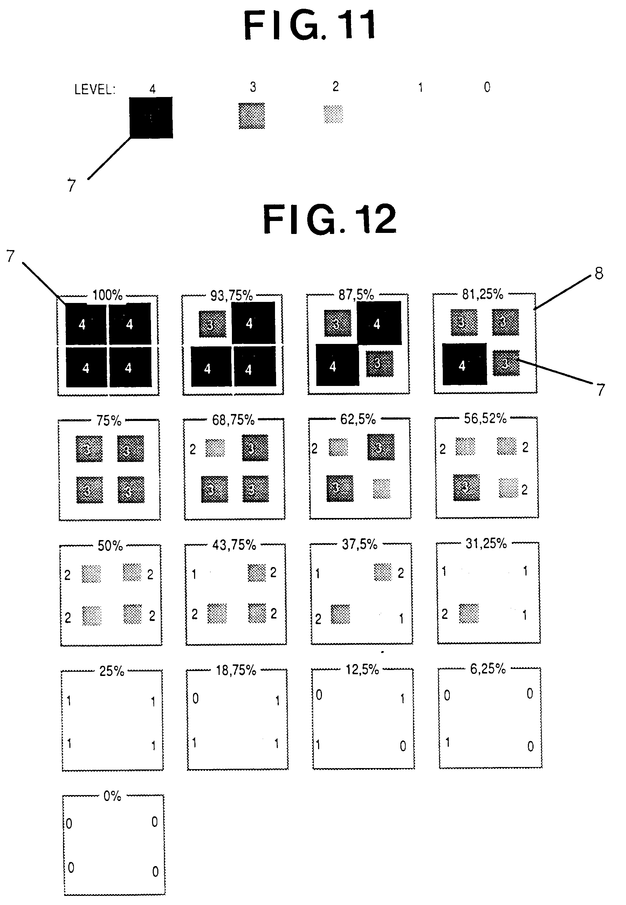

In fig. 11 and 12 is shown how the invention can be applied on a printer the controllability of which on the dots 7 follows the one shown in fig. 5 and 6, that is, both the density and the size of the dot can be controlled. The description of this embodiment follows the one given for fig. 7 and 8 above.

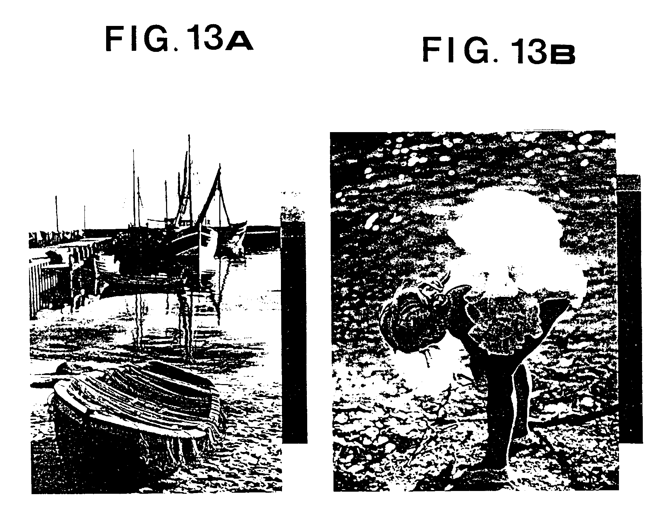

Since the DDC-technique has to be explained and illustrated on dot level, drawings are made at an enlarged scale it might be difficult to understand the use of the technique.
All screen technique uses the limited resolution capability of the eye to distinguish the smallest structure elements of the picture. If the quality of the picture is high enough (Q-value larger than about 1500) the human eye without aid can not determine how the cells are built up. This is illustrated in fig. 13A and 13B where 18 gray-tones plus a white and a black level has been used in a resolution of 80 cells/2.54 cm (=cells/inch) (that is Q=20x80 = 1600). In fig. 14b, which has a resolution of 17 grey-tones (Q = 1275), the eye is disturbed by the unregularity of the cells. In fig. 14c, which has a more coarse cell resolution than 14b but has substantially more grey-tones or cell sizes, the eye cannot distinguish the internal structure of the cell.

A printer which uses DDC with the resolution 300 dots/2.54 cm (=dots/inch) and ability to control the dot size and/or the color value in eg. 4 levels plus the white level, can reproduce grey-tone pictures in eg. a resolution of 75 cells/2.54 cm (=cells/inch) and 75 grey-tones (that is Q= 4875) or eg. 150 cells/2.54 cm (=cells/inch) resolution and 17 grey-tones (that is Q = 2550). The corresponding picture quality reproduced by merely conventional dithering technique demands a printer with the resolution 600 dots/2.54 cm (=dots/inch). Even if the Q-value is a very coarse quality measure, which has been used here only for pedagogical reasons, the invention will substantially improve printing performance at reproduction of grey-tones and colour. Moreover it is of course possible that dots of different size and color value are mixed with each other, so that 4⁴ tones are obtained, if every cell contains 4 dots. If the cells are divided into other patterns, with eg. 5 or 6 dots in every cell the number of tones in corresponding degree will be larger.

The invention is not limited to embodiments of method described herein. Thus it is possible within the scope of the invention to use both fewer and more levels of size and or color value of the dots in combination with both fewer and more dots in every cell.

A printer with 400 dots/2.54 cm (=dots/inch) with possibility to vary the eg. the dot size in 8 levels thus can reproduce eg. 128 grey-tones with the cell resolution 100 dots/2.54 cm (=dots/inch) and a 200 dots/2.54 cm (=dots/inch) printer with possibility to vary the color value of the dots in two levels plus the purely white level can reproduce 19 grey-tones with the cell resolution 66.7 cells/2.54 cm (=cells/inch). In the last mentioned case every cell consists of 3 x 3 =9 dots.

Further the pattern according to which the dots are changed in the cell can be freely selected for optimum picture quality within the scope of the invention. The invention is neither restricted to quadratic or circular dots but with advantage can be applied on printer concepts which only can eg. change the length of the dots in the feeding direction of by eg. changing the paper speed and/or the printing time for every single dot.

## Claims

1. Method to improve quality of printing, when producing half-tone images on an information carrier using printer means, in which a number of cells (pixels) are used for creating images, each cell consisting of a number of dots, which are brought together in the cell, whereby the number of dots is variable, the method comprising: producing dots with variable color value and size, whereby the color value and size are individually controllable for each dot in the cell, so that the dots form a preselected pattern in each cell, and wherein the pattern varies with respect to the number of dots, the color value and the dot size.

2. Method according to claim 1, wherein the form, e.g. the circular form, rectangular form or length of each dot is variable.

3. Device to improve quality of printing, when producing half-tone images on an information carrier using printer means, in which a number of cells (pixels) are used for creating images, each cell consisting of a number of dots, which are brought together in the cell, whereby the number of dots is variable, wherein: printing means are arranged to produce dots with variable color value and size, whereby the color value and size are individually controllable for each dot in the cell, so that the dots form a preselected pattern in each cell, and wherein the pattern varies with respect to the number of dots, the color value and the dot size.

4. Device according to claim 3, wherein the form, e.g. the circular form, rectangular form or length of each dot is variable.

5. Device according to claim 3, wherein
an information carrier is brought into electrical cooperation with an electrode matrix, whereby the electrodes of the electrode matrix are connected to at least one voltage source, output time or level of which being controllable, and which electrodes form a number of cells (pixels) for creating images, each cell formed by a number of dots.

6. Device according to claim 3, comprising controlling the size of the dots and their color value by changing the speed of the information carrier and/or the voltage level applied to and/or the application time of the voltage applied to electrodes of the electrode matrix.

## Patentansprüche

1. Verfahren zur Verbesserung der Druckqualität bei der Erzeugung von Halbton-Abbildungen auf einem Informationsträger unter Verwendung einer Druckeinrichtung, in der zur Erzeugung von Abbildungen eine Anzahl von Zellen (Bildzellen) zur Anwendung kommen, von denen jede Zelle aus einer Anzahl von Punkten besteht, die in der Zelle zusammengebracht sind, wobei die Anzahl der Punkte variabel ist, bei dem Punkte mit variablem Farbwert und variabler Grösse erzeugt werden, wobei der Farbwert und die Grösse für jeden Punkt in der Zelle individuell derart steuerbar sind, daß die Punkte ein vorgewähltes Muster in jeder Zelle bilden, und wobei das Muster im Hinblick auf die Anzahl von Punkten, den Farbwert und die Punktgrösse variiert.

2. Verfahren nach Anspruch 1, in dem die Form jedes Punktes, z.B. die Kreisform, die Rechteckform oder die Länge, variabel ist.

3. Einrichtung zur Verbesserung der Druckqualität bei der Erzeugung von Halbton-Abbildungen auf einem Informationsträger unter Verwendung einer Druckeinrichtung, in der zur Erzeugung von Abbildungen eine Anzahl von Zellen (Bildzellen) zur Anwendung kommen, von denen jede Zelle aus einer Anzahl von Punkten besteht, die in der Zelle zusammengebracht sind, wobei die Anzahl der Punkte variabel ist, in der Druckeinrichtungen vorgesehen sind, um Punkte mit variablem Farbwert und variabler Grösse zu erzeugen, wobei der Farbwert und die Grösse für jeden Punkt in der Zelle individuell derart steuerbar sind, daß die Punkte in jeder Zelle ein vorgewähltes Muster bilden, und wobei das Muster im Hinblick auf die Anzahl von Punkten, den Farbwert und die Punktgrösse variiert.

4. Einrichtung nach Anspruch 3, in der die Form jedes Punktes, z.B. die Kreisform, die Rechteckform oder die Länge, variabel ist.

5. Einrichtung nach Anspruch 3, in der ein Informationsträger einem elektrischen Zusammenwirken mit einer Elektrodenmatrix unterzogen wird, wobei die Elektroden der Elektrodenmatrix mit zumindest einer Spannungsquelle verbunden sind, deren Leistungsdauer oder Höhe steuerbar ist, und eine Anzahl von Zellen (Bildzellen) zur Erzeugung von Abbildungen bilden, von denen jede Zelle durch eine Anzahl von Punkten gebildet ist.

6. Einrichtung nach Anspruch 3, bei der die Grösse und der Farbwert der Punkte durch eine Änderung der Geschwindigkeit des Informationsträgers und/oder der angelegten Spannungshöhe und/oder der Anwendungsdauer der an den Elektroden der Elektrodenmatrix anliegenden Spannung gesteuert werden.

## Revendications

1. Procédé apportant des améliorations à la qualité d'impression, lors de la production d'images en demi-teinte sur un support d'information utilisant des imprimantes, dans lequel un certain nombre de cellules (pixels) sont utilisées pour créer des images, chaque cellule étant constituée par un certain nombre de points qui sont réunis dans la cellule, le nombre de points étant variable, le procédé comprenant la production de points ayant une valeur chromatique et une taille variables, la valeur chromatique et la taille pouvant être commandées individuellement pour chaque point de la cellule, de telle sorte que les points forment un motif prédéterminé dans chaque cellule, caractérisé en ce que le motif varie en fonction du nombre de points, de la valeur chromatique et de la taille du point.

2. Procédé selon la revendication 1, caractérisé en ce que la forme, par exemple la forme circulaire, la forme rectangulaire ou la longueur de chaque point est variable.

3. Dispositif apportant des améliorations à la qualité d'impression, lors de la production d'images en demi-teinte sur un support d'information utilisant des imprimantes, dans lequel un certain nombre de cellules (pixels) sont utilisées pour créer des images, chaque cellule étant constituée par un certain nombre de points qui sont réunis dans la cellule, le nombre de points étant variable, caractérisé en ce que des moyens d'impression sont prévus pour produire des points ayant une valeur chromatique et une taille variables, la valeur chromatique et la taille pouvant être commandées individuellement pour chaque point de la cellule, de telle sorte que les points forment un motif prédéterminé dans chaque cellule, et en ce que le motif varie en fonction du nombre de points, de la valeur chromatique et de la taille du point.

4. Dispositif selon la revendication 3, caractérisé en ce que la forme, par exemple la forme circulaire, la forme rectangulaire ou la longueur de chaque point est variable.

5. Dispositif selon la revendication 3, caractérisé en ce qu'un support d'information est mis en relation électrique avec une matrice d'électrodes, les électrodes de la matrice d'électrodes étant reliées à au moins une source de tension, dont la durée ou le niveau de sortie est contrôlable, les électrodes formant un certain nombre de cellules (pixels) pour créer des images, chaque cellule étant formée par un certain nombre de points.

6. Dispositif selon la revendication 3, comportant un moyen pour contrôler la taille des points et leur valeur chromatique en changeant la vitesse du support d'information et/ou le niveau de la tension appliquée et/ou la durée d'application de la tension sur les électrodes de la matrice d'électrodes.
